Europäisches Patentamt

European Patent Office

Office européen des brevets

(11) Veröffentlichungsnummer: **0 024 700**

**A1**

(12) **EUROPÄISCHE PATENTANMELDUNG**

(21) Anmeldenummer: 80104997.4

(22) Anmeldetag: 22.08.80

(51) Int. Cl.³: **A 01 F 25/14**
**B 65 D 21/00**

(30) Priorität: 27.08.79 DE 2934517

(43) Veröffentlichungstag der Anmeldung:
**11.03.81 Patentblatt 81/10**

(84) Benannte Vertragsstaaten:
**AT CH FR IT LI**

(71) Anmelder: Grebau Greschbach-Industriebau GmbH &
Co KG
Greschbachstrasse 1
D-7500 Karlsruhe-Grötzingen(DE)

(72) Erfinder: Gresbach, Manfred
Eisenbahnstrasse 44
D-7834 Herbolzheim(DE)

(72) Erfinder: Fink, Josef
Birkenweg 35
D-7834 Herbolzheim(DE)

(74) Vertreter: Durm Klaus, Dr.-Ing.
Felix-Mottl-Strasse 1 a
D-7500 Karlsruhe 21(DE)

(54) **Lagerbehälter für Erntegut.**

(57) Die Erfindung betrifft einen Lagerbehälter für Erntegut aus Blech, der einen Boden (1), zwei Seitenwände (2 und 3) sowie zwei Stirnwände (4 und 5) aufweist und mit Einrichtungen zum Transport und für ein Aufeinanderstapeln ausgestattet ist, wobei die Seitenwände (2 und 3) parallel zum Boden verlaufende Sicken (6) tragen. Die mit ihren Erhebungen (7) nach außen weisenden Sicken (6) sind von zwei senkrecht zum Boden (1) verlaufenden Reihen von Schlitzen (8) quer durchsetzt, und die Stirnwände (4, 5) weisen an ihren Längsseiten zweimal rechtwinkelig nach innen abgebogene Abkantungen (11) auf, deren Randleisten (12) in den Schlitzen (8) sitzen.

EP 0 024 700 A1

./...

Fig.1

Fig.3

G 2017/80-EU
19.August 1980

GREBAU

Greschbach-Industriebau GmbH & Co KG, Grötzingen

7500 Karlsruhe-Grötzingen
Greschbachstraße 1

Lagerbehälter für Erntegut

Die Erfindung betrifft einen Lagerbehälter für Erntegut
aus Blech, der einen Boden, zwei Seitenwände sowie zwei
Stirnwände aufweist und mit Einrichtungen zum Transport
und für ein Aufeinanderstapeln ausgestattet ist, wobei
die Seitenwände parallel zum Boden verlaufende Sicken
tragen.

Die Erfindung findet insbesondere Anwendung zur Lagerung
von geerntetem Mais in landwirtschaftlichen Betrieben
und in Lagerhäusern.

Zur Lagerung von Mais, welcher in vielen Ländern
vorwiegend als Futtermittel Verwendung findet, werden in großen Mengen Lagerbehälter mit einem
Rauminhalt von etwa 2 Kubikmetern benötigt, die zur rationellen Ausnutzung der Lagerräume übereinander stapelbar sein müssen und die ohne Schwierigkeiten leer
und gefüllt transportiert werden können.

Lagerbehälter für Erntegut sind in den verschiedensten Ausführungsformen seit langem bekannt. Alle diese Lagerbehälter sind jedoch material- und montageaufwendig konstruiert
und ihre Stapelbarkeit ist sehr begrenzt. Zur Erhöhung der
Stabilität ist bei einer Weinbütte aus Edelstahl die Versteifung ihrer Seitenwände durch Sicken vorgeschlagen worden (DE-OS 24 21 886).

Die Aufgabe der Erfindung besteht in der Konzeption eines Lagerbehälters, der preisgünstig herstellbar ist und dabei eine hohe Stabilität als Voraussetzung für eine ausgezeichnete Stapelbarkeit aufweist.

Zur Lösung der gestellten Aufgabe ist von einem Lagerbehälter der eingangs beschriebenen Art ausgegangen worden und gelöst wurde die Aufgabe dadurch, daß die mit ihren Erhebungen nach aussen weisenden Sicken von zwei senkrecht zum Boden verlaufenden Reihen von Schlitzen quer durchsetzt sind, und die Stirnwände an ihren Längsseiten zweimal rechtwinkelig nach innen abgebogene Abkantungen aufweisen, deren Randleisten in den Schlitzen sitzen. Es hat sich durch angestellte Untersuchungen gezeigt, daß die vorgeschlagene Ausgestaltung der Seiten- und der Stirnwände in Kombination mit deren gegenseitiger Verbindung mit Hilfe der Randleisten und der Schlitze eine hervorragende Stabilität und damit eine hohe Belastbarkeit zur Folge hat, wobei wegen der sehr einfachen Herstellung die Gestehungskosten überraschend nieder sind. Aus der hohen Belastbarkeit folgt eine sehr gute Stapelbarkeit.

Vorteilhaft sind die Ränder der Schlitze mit den Randleisten durch Schweißnähte miteinander verbunden. Durch diese Maßnahme wird die Stabilität erheblich gesteigert, sodaß - wie festgestellt werden konnte - wenigstens fünf volle Lagerbehälter übereinander gesetzt werden können, ohne daß irreversible bzw. unzulässige Verformungen bei den Behältern auftreten.

Zweckmäßig weisen die Sicken ein satteldachförmiges Profil auf, dies erleichtert deren Herstellung auf der Abkantpresse.

BAD ORIGINAL

0024700

Vorteilhaft sind die Stirnwände mit einer pyramidenförmigen Bombierung versehen, was zur Erhöhung der Widerstandsfähigkeit der Stirnwände beiträgt.

Am Boden des Lagerbehälters können zwei U-förmig gebogene Füße befestigt und am Kopf der Seitenwände nach oben offene Rinnen angeordnet sein. Die Rinnen dienen zur Aufnahme der Füße, sodaß diese konstruktive Ausgestaltung auf eine sehr einfache Weise das Aufeinanderstapeln erlaubt.

Als Rinne dient zweckmäßig ein L-Profil.

Zum Transport des vorgeschlagenen Lagerbehälters mit Hilfe eines Gabelstaplers können an der Unterseite des Bodens zwei parallele U-Schienen mit ihrem Rücken befestigt sein. Sofern diese U-Schienen an ihren Schenkeln Ausnehmungen aufweisen, an die Paare von L-Profilen senkrecht anstoßen, so ist ein Untergreifen des Lagerbehälters mit dem Gabelstapler auch in Querrichtung möglich.

Die Erfindung wird nachstehend an einem bevorzugten Ausführungsbeispiel unter Bezugnahme auf die beigefügte Zeichnung näher erläutert, dabei zeigen:

Fig. 1          einen Lagerbehälter in einer perspektivischen Darstellung;

Fig. 2          einen Ausschnitt aus einer Stirnwand des Lagerbehälters mit einer zweimal rechtwinkelig nach innen abgebogenen Abkantung der Längsseite im Bereich des Kreises A in Fig. 1;

BAD ORIGINAL

Fig.3  einen Ausschnitt aus einer Seitenwand des Lagerbehälters mit einer Sicke, deren Erhebung nach außen weist, im Bereich des Kreises A in Fig. 1.

Der vorgeschlagene Lagerbehälter besteht im wesentlichen aus einem Boden 1, zwei Seitenwänden 2 und 3 sowie zwei Stirnwänden 4 und 5, die aus dünnem Stahlblech hergestellt sind. Die Seitenwand 2, der Boden 4 und die andere Seitenwand 3 sind aus einem gemeinsamen Blechzuschnitt durch entsprechendes Abkanten in Gestalt eines U gefertigt.

Die beiden Seitenwände 2 und 3 tragen jeweils mehrere Sicken 6, deren Erhebungen 7 ein satteldachförmiges Profil aufweisen. Diese Sicken 6 verlaufen parallel zum Boden 1 bzw. horizontal, und deren Erhebungen 7 weisen jeweils nach außen, also vom Behälterinnern weg.

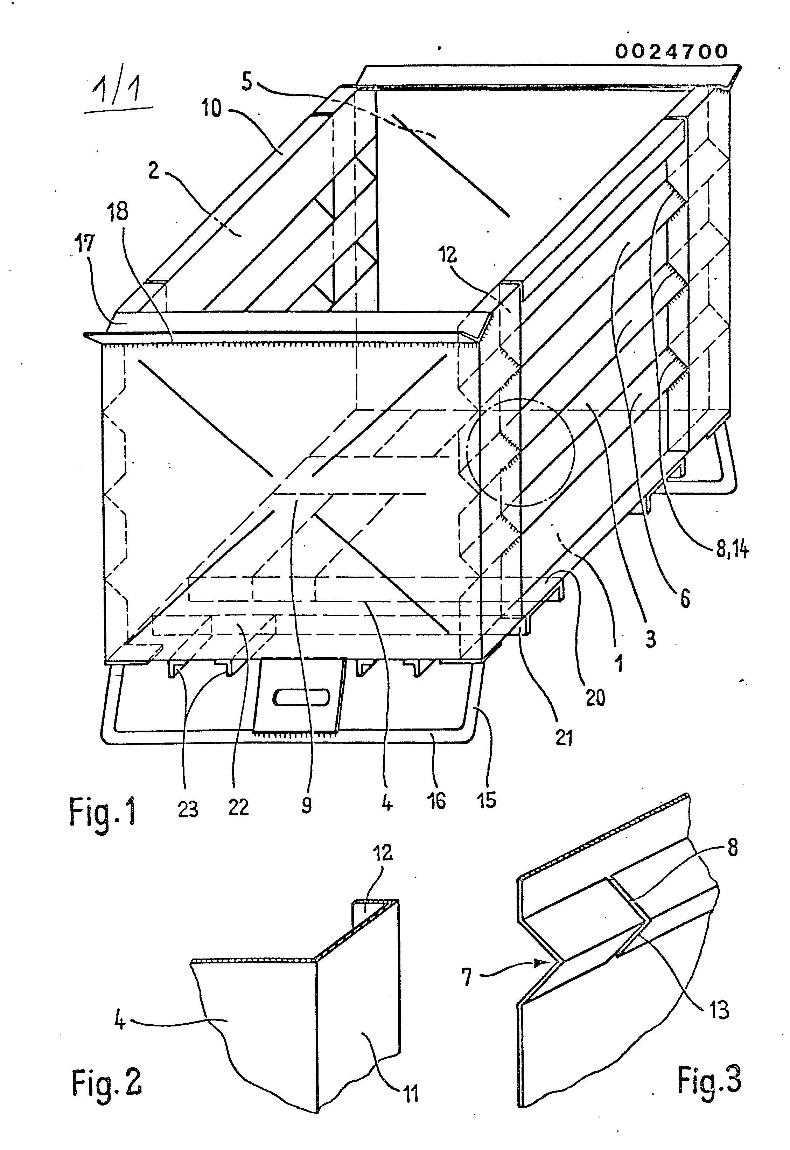

Die Sicken 6 sind im Bereich ihrer Vertikalkanten in Querrichtung von zwei Reihen von Schlitzen 8 (vgl. auch Fig. 3) durchsetzt, welche senkrecht zum Boden bzw. vertikal verlaufen. Die lichte Weite dieser Schlitze 8 ist geringfügig größer als die Blechdicke der Stirnwände 4, 5, und die Schlitze 8 durchsetzen die Sicken 6 bis zu der Oberseite der Seitenwände 2 und 3.

Beide Seitenwände 2, 3 sind an ihrer Oberkante zur Bildung eines nach unten offenen Randes 10 U-förmig umgebogen.

Die beiden Stirnwände 4 und 5 des erfindungsgemäßen Lagerbehälters sind zur Erhöhung ihrer Stabilität mit einer sehr niederen, pyramidenförmigen und nach außen gerichteten Bombierung 9 versehen. Die Stirnwände 4, 5 weisen an ihren beiden vertikalen Längsseiten pfostenartige Abkantungen 11 auf, die zweimal rechtwinkelig nach innen abgebogen sind (vgl. Fig.2) und damit ebene Randleisten 12 tragen, die parallel zur Innenseite der Stirnwände 4, 5 stehen.

Die Stirnwände 2, 3 und die Stirnwände 4, 5 des Lagerbehälters sind so zusammengesetzt, daß die Randleisten 12 der Stirnwände 4, 5 in den Schlitzen 8 der Stirnwände 4, 5 sitzen. Um dies zu bewerkstelligen, werden die Randleisten 12 jeder Stirnwand in vertikaler Richtung in die Schlitze 8 der beiden anstoßenden Seitenwände 2 und 3 eingeschoben. Die Ränder 13 der Schlitze 8 sind mit den Randleisten 12 durch Schweißnähte 14 fest verbunden, sie dies in Fig.1 dargestellt ist.

Am Boden 1 des Lagerbehälters sind zwei aus Stahlrohren U-förmig gebogene Füße 15 befestigt, welche geringfügig so weit schräg nach außen stehen, daß die Mittelachsen der U-Rücken 16 in der Ebene der Stirnwände 4, 5 liegen. Am Kopf der Seitenwände 4, 5 sind nach oben hin offene Rinnen 17 angeordnet, diese Rinnen 17 bestehen aus einem stählernen L-Profil, welches durch Schweißnähte 18 an den Seitenwänden 4, 5 befestigt ist, wobei die Mittelachse des U-Rückens 16 und die Sohle der Rinne 17 in der selben, vertikalen Ebene liegen. Versteifungsbleche 19 verbinden die U-Rücken 16 mit den Unterkanten der Stirnwände 4, 5 bzw. dem Boden 1. Die gewählte Anordnung der Füße 15 und der Rinnen 17 gestattet das Aufeinanderstapeln mehrerer Lagerbehälter.

An der Unterseite des Bodens 1 sind mit ihrem Rücken 20 zwei parallele U-Schienen 21 aus Stahl befestigt, welche zur Aufnahme der Gabel eines zum Transport des Lagerbehälters dienenden Gabelstaplers vorgesehen ist. Diese U-Schienen 21 weisen an ihren Schenkeln beiderseits Ausnehmungen 22 auf, an die Paare von L-Profilen 23 senkrecht anstoßen. Diese L-Profile dienen zur Aufnahme der Einrichtungen des Gabelstaplers in Längsrichtung.

Zusammenstellung der verwendeten Bezugsziffern

1   Boden

2   Seitenwand

3   Seitenwand

4   Stirnwand

5   Stirnwand

6   Sicke

7   Erhebung

8   Schlitz

9   Bombierung

10  Rand

11  Abkantung

12  Randleiste

13  Rand

14  Schweißnaht

15  Fuß

16  U-Rücken (von 15)

17  Rinne

18  Schweißnähte

19  Versteifungsblech

20  Rücken

21  U-Schiene

22  Ausnehmung (von 21)

23  L-Profil

Patentansprüche

1. Lagerbehälter für Erntegut aus Blech, der einen Boden, zwei Seitenwände sowie zwei Stirnwände aufweist und mit Einrichtungen zum Transport und für ein Aufeinanderstapeln ausgestattet ist, wobei die Seitenwände parallel zum Boden verlaufende Sicken tragen, d a d u r c h g e k e n n z e i c h n e t , daß die mit ihren Erhebungen (7) nach außen weisenden Sicken (6) von zwei senkrecht zum Boden (1) verlaufenden Reihen von Schlitzen (8) quer durchsetzt sind, und die Stirnwände (4, 5) an ihren Längsseiten zweimal rechtwinkelig nach innen abgebogene Abkantungen (11) aufweisen, deren Randleisten (12) in den Schlitzen (8) sitzen.

2. Lagerbehälter nach Anspruch 1, d a d u r c h g e k e n n z e i c h n e t , daß die Ränder (13) der Schlitze (8) mit den Randleisten (12) durch Schweißnähte (14) miteinander verbunden sind.

3. Lagerbehälter nach Anspruch 1 oder 2, d a d u r c h g e k e n n z e i c h n e t , daß die Sicken (6) ein satteldachförmiges Profil aufweisen.

4. Lagerbehälter nach einem der Ansprüche 1 bis 3, d a d u r c h g e k e n n z e i c h n e t , daß die Stirnwände (4) mit einer pyramidenförmigen Bombierung (9) versehen sind.

0024700

5. Lagerbehälter nach einem der Ansprüche 1 bis 4, d a - d u r c h   g e k e n n z e i c h n e t , daß am Boden (1) zwei U-förmig gebogene Füße (15) befestigt sind.

6. Lagerbehälter nach einem der Ansprüche 1 bis 5, d a - d u r c h   g e k e n n z e i c h n e t , daß am Kopf der Seitenwände (2, 3) nach oben offene Rinnen (17) angeordnet sind.

7. Lagerbehälter nach Anspruch 6, d a d u r c h   g e - k e n n z e i c h n e t , daß als Rinne (17) ein L-Profil dient.

8. Lagerbehälter nach einem der Ansprüche 1 bis 7, d a - d u r c h   g e k e n n z e i c h n e t , daß an der Unterseite des Bodens (1) zwei parallele U-Schienen (21) mit ihrem Rücken (20) befestigt sind.

9. Lagerbehälter nach Anspruch 8, d a d u r c h   g e - k e n n z e i c h n e t , daß die U-Schienen (21) an ihren Schenkeln Ausnehmungen (22) aufweisen, an die Paare von L-Profilen (23) senkrecht anstoßen.

0024700

1/1

Fig.1

Fig.2

Fig.3

Europäisches Patentamt

**EUROPÄISCHER RECHERCHENBERICHT**

**0024700**

Nummer der Anmeldung

EP 80 10 4997.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - U - 1 809 068 (J.HERRING) <br> * Seite 6, Zeilen 1 bis 3; Fig. 3, 5 * <br> -- | 3 |
| | DE - U - 1 877 440 (MANNESMANN AG.) <br> * Seite 3, Zeilen 5 bis 12; Fig. 1, 2 * <br> -- | 4,5 |
| | US - A - 2 596 881 (F.E. WHITE) <br> * Spalte 2, Zeilen 40 bis 43; Fig. 1 * <br> -- | 6,7 |
| | US - A - 3 910 446 (R.S. DOUGHERTY) <br> * Spalte 2, Zeilen 57 bis 61; <br>   Fig. 3, 9 * <br> -- | 8 |
| A | DE - B2 - 2 112 099 (W. ZARGES) <br> * Spalten 1, 2 * <br> -- | |
| A | DE - B2 - 2 158 509 (A. KARL) <br> * Anspruch 1 * <br> -- | |
| D,A | DE - A1 - 2 421 886 (APPARATE-SPEZIAL- <br>   TECHNIK GMBH) <br> * Anspruch 1; Fig. 1 * <br> ---- | |

**KLASSIFIKATION DER ANMELDUNG (Int.Cl.³)**

A 01 F   25/14

B 65 D   21/00

**RECHERCHIERTE SACHGEBIETE (Int. Cl.³)**

A 01 F   25/14

B 65 D   6/00

B 65 D   21/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 12-11-1980 | SCHOFER |

EPA form 1503.1   06.78